# EUROPÄISCHE PATENTSCHRIFT

(11) **EP 1 322 862 B1**
(45) Veröffentlichungstag und Bekanntmachung des Hinweises auf die Patenterteilung: **13.12.2006**
(21) Anmeldenummer: 01980185.1
(22) Anmeldetag: 21.09.2001
(51) Int. Cl.: F02N 15/08, F16H 59/06

(54) **STARTVORRICHTUNG**
STARTING DEVICE
DISPOSITIF DE DEMARRAGE

(30) Priorität: 21.09.2000 DE 10047477
(43) Veröffentlichungstag der Anmeldung: 02.07.2003
(73) Patentinhaber: ROBERT BOSCH GMBH, 70442 Stuttgart (DE)
(72) Erfinder: BRAUN, Hans, 70178 Stuttgart (DE); KUGLER, Juergen, 74369 Loechgau (DE)
(86) Internationale Anmeldenummer: PCT/DE2001/003629
(87) Internationale Veröffentlichungsnummer: WO 2002/025106

(56) Entgegenhaltungen:
- DE-A- 19 927 905
- US-A- 4 912 993
- US-A- 6 007 443
- US-A- 6 098 735

## Beschreibung

Die Erfindung betrifft eine Startvorrichtung für Brennkraftmaschinen nach der Gattung des unabhängigen Patentanspruchs. Aus der DE 199 27 905 A1 ist eine Startvorrichtung bekannt, die zwischen einem Antrieb und einem Ritzel ein Getriebe mit variabler Übersetzung aufweist. Das Getriebe ist ein Planetengetriebe, dessen Sonnenrad vom Antrieb antreibbar ist. Der Abtrieb des Planetengetriebes findet über die Planetenräder und damit über den Planetenträger statt. Das Planetengetriebe ermöglicht zwei verschiedene Übersetzungen: Bei der ersten Getriebeübersetzung bei niedrigen Drehzahlen findet über das mittels eines Freilaufs festgehaltenen Hohlrades eine Übersetzung ins Langsame statt. Ab einer bestimmten Drehzahl des Antriebs sorgen mehrere, am Planetenträger befestigte Fliehkraftkopplungselemente dafür, dass das Hohlrad mit dem Planetenträger blockiert wird und so das Planetengetriebe von der Untersetzung in eine Eins-zu-Eins-Übersetzung umgeschaltet wird. Bei dieser Ausführung ist nachteilig, dass die sogenannte Hochlaufunterstützung für die Brennkraftmaschine nur an zwei Betriebspunkten optimal angepasst ist.

Aus der US 4,912,993 ist eine Startvorrichtung bekannt, die einen stufenlosen Drehzahländerungsmechanismus hat. Dies hat den Vorteil, dass mittels eines derartigen Getriebes im Starter eine Drehzahlanpassung des Ritzels während des Betriebs, d.h. während des Startvorgangs, vorgenommen werden kann. Nachteilig ist bei dieser dort vorgeschlagenen Ausführung, dass das Getriebe (Drehzahländerungsmechanismus) sehr aufwendig gestaltet ist.

### Vorteile der Erfindung

Die erfindungsgemäße Startvorrichtung mit den Merkmalen des Hauptanspruchs hat den Vorteil, dass die Startvorrichtung durch das variable Übersetzungsverhältnis des Getriebes auf die Betriebszustände der Brennkraftmaschine im Startfall einerseits günstigst möglich angepasst werden kann. Die Hochlaufunterstützung der Startvorrichtung ist dadurch optimal. Der hier vorgeschlagene Starter weist darüber hinaus eine verhältnismäßig einfache Konstruktion auf.

Die stufenlose Ausführung des Getriebes führt zu geringerem Verschleiß und zu geringeren Geräuschen im Getriebe, da hier keine Kraft- bzw. Lastspitzen beim Ändern des Übersetzungsverhältnisses auftreten. Durch die in den Unteransprüchen aufgeführten Maßnahmen sind vorteilhafte Weiterbildungen der Startvorrichtung nach dem Hauptanspruch möglich. Der Aufwand zur Verwirklichung der variablen Übersetzung bei der Startvorrichtung ist dann besonders gering, wenn das Getriebe selbstregelnd ist. Auf Sensoren, Stellelemente und aufwendige Regelungstechnik kann verzichtet werden.

### Zeichnung

In den Zeichnungen sind Ausführungsbeispiele einer erfindungsgemäßen Startvorrichtung dargestellt. Es zeigen:
Figur 1 eine schematische Ansicht einer erfindungsgemäßen Startvorrichtung,
Figur 2 eine räumliche Teilschnittdarstellung des drehmomentgeregelten Getriebes,
Figur 3 eine räumliche Teilschnittdarstellung des drehzahlgeregelten Getriebes,
Figur 4 eine räumliche Darstellung der angelenkten Umlaufräder.

### Beschreibung der Ausführungsbeispiele

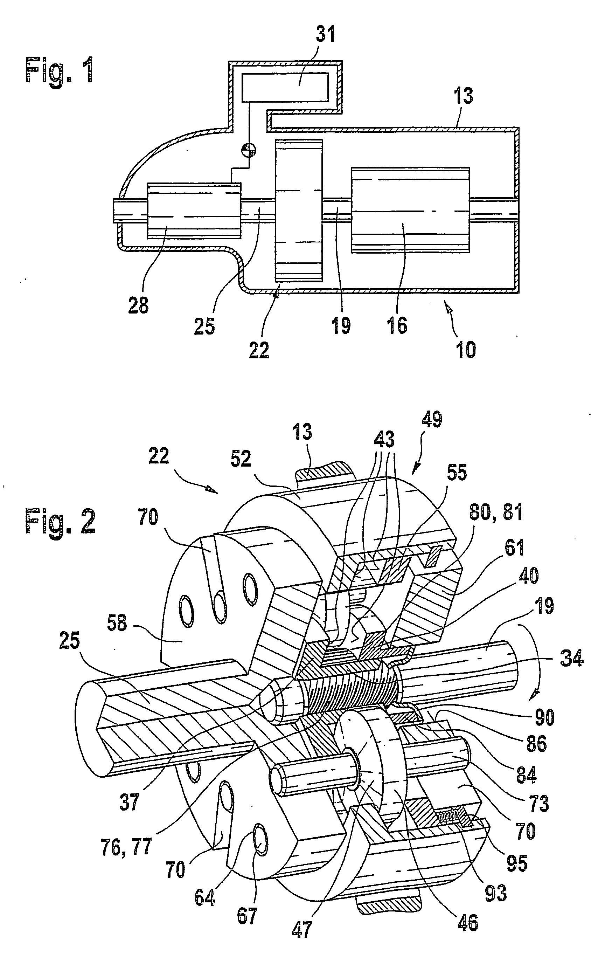

In Figur 1 ist eine Startvorrichtung 10 dargestellt, die in einem Gehäuse 13 mehrere Baugruppen aufnimmt. Zu den Baugruppen gehört der Antrieb 16, der über eine Antriebswelle 19 und ein Getriebe 22 eine Abtriebswelle 25 antreibt. Auf der Abtriebswelle 25 ist drehverschieblich ein Einspurgetriebe 28 gelagert. Das Einspurgetriebe 28 ist mittels eines Eindrückrelais 31 in einen nicht dargestellten Zahnkranz einer Brennkraftmaschine einrückbar.

In Figur 2 ist ein erstes Ausführungsbeispiel des Getriebes 22 dargestellt. Dieses erste Ausführungsbeispiel ist ein Getriebe mit variabler Übersetzung, wobei die Übersetzung stufenlos variierbar ist. Das Getriebe 22 ist als sogenanntes Umlaufgetriebe gestaltet. Ein zweiteilig ausgebildetes Zentralrad 34 wird über die Antriebswelle 19 angetrieben. Das Zentralrad 34 besteht aus einem ersten Flankenrad 37 und einem zweiten Flankenrad 40. Das erste Flankenrad 37 und das zweite Flankenrad 40 haben jeweils zueinandergerichtete Flankenflächen 43, zwischen denen zumindest ein Umlaufrad 46 einklemmbar ist. Ein weiteres Getriebeelement ist das Innenrad 49, das wiederum zweiteilig ausgebildet ist. Das Innenrad 49 besteht aus einem ersten Flankeninnenrad 52 und aus einem zweiten Flankeninnenrad 55. Sowohl das erste als auch das zweite Flankeninnenrad 52 bzw. 55 weisen einander zugerichtete Flankenflächen 43 auf. Beiderseits der Umlaufräder 46 ist je ein Flanschelement angeordnet, wobei abtriebsseitig ein Abtriebsflansch 58 einstückig mit der Abtriebswelle 25 verbunden ist. Antriebsseitig ist ein ringförmiger Antriebsflansch 61 angeordnet. Der Abtriebsflansch 58 und der Antriebsflansch 61 sind miteinander drehfest verbunden. Diese drehfeste Verbindung wird erreicht, indem sowohl im Abtriebsflansch 58 als auch im Antriebsflansch 61 einander gegenüberliegende Bohrungen 64 angeordnet sind, durch die Bolzen 67 zur Verbindung hindurchgesteckt sind. Der Abtriebsflansch 58 und der Antriebsflansch 61 sind drehfest und auch axial unverschieblich miteinander verbunden.

Sowohl der Antriebsflansch 61 als auch Abtriebsflansch 58 weisen jeweils an ihrem Umfang sich nach radial außen erstreckende Nuten 70 auf. Diese Nuten 70 ermöglichen es Achsen 73, auf denen die Umlaufräder 46 fest angeordnet sind, darin nach radial außen oder auch nach radial innen zu gleiten.

Die Antriebswelle 19 weist einen Wellenabschnitt 76 auf, in den ein Steilgewinde 77 eingearbeitet ist. Das Steilgewinde 77 ist beiderseits mit zwei Sprengringen begrenzt, wobei der erste Sprengring einen Anschlag für das erste Flankenrad darstellt und der andere Sprengring einen Anschlag für das zweite Flankenrad darstellt. Das erste Flankenrad 37 weist eine zentrale Bohrung auf, in die ebenfalls ein Steilgewinde 77 eingearbeitet ist. Das erste Flankenrad 37 weist darüberhinaus einen zylindrischen Außenabschnitt 80 auf, in den eine Geradverzahnung 81 eingearbeitet ist. Der Außenabschnitt 80 liegt radial innerhalb der Umlaufräder 46. Auf den Außenabschnitt 80 mit der Geradverzahnung 81 ist das zweite Flankenrad 40 aufgesetzt, das eine der Geradverzahnung 81 entsprechende und in diese eingreifende Innengeradverzahnung aufweist. Das zweite Flankenrad 40 weist in einer ersten Variante einen sich axial erstreckenden, zum Antrieb gerichteten zylindrischen Abschnitt 84 auf, der mit seiner Außenseite in einer Bohrung 86 des Antriebsflanschs 61 verschieblich gelagert sein kann. In einer zweiten variante kann der zylindrische Abschnitt 84 aus Platzgründen auch nur in den Antriebsflansch 61 hineinragen, ohne hier Lagerkräfte zu übertragen. Über eine am Ende des zylindrischen Abschnitts 84 angeordnete Tellerscheibe 90 ist das zweite Flankenrad durch den anderen Sprengring in seiner Bewegung gehindert.

Das Innenrad 49 umgreift mit dem ersten Flankeninnenrad 52 und dem zweiten Flankeninnenrad 55 das zumindest eine Umlaufrad 46. Dabei ist das zweite Flankeninnenrad 55 innerhalb des ersten Flankeninnenrades 52 beweglich gelagert. Das zweite Flankeninnenrad stützt sich dabei mittels eines Federelements 93 an einem Innensicherungsring 95 ab. Das erste Flankeninnenrad 52 ist innerhalb des Gehäuses 13 verschieblich gelagert. Das zumindest eine Umlaufrad 46 ist insgesamt doppelkonusartig ausgebildet, wobei das Umlaufrad 46 an seinen drehaxialen Enden jeweils eine nach außen gerichtete Konusfläche 47 aufweist.

Nachfolgend wird die Funktion der Startvorrichtung 10, insbesondere des Getriebes 22, erläutert. Dabei ist die Ausgangsposition des Getriebes 22 wie folgt:
Es wirkt noch kein Antriebsmoment vom Antrieb 16, so dass die Umlaufräder 46 ihre radial innerste Position einnehmen. Dies ist bedingt durch das Federelement 93, das auf das zweite Flankeninnenrad 55 drückt, wodurch das erste Flankeninnenrad 52 zur Anlage an den Umlaufrädern 46 gelangt. Aufgrund der Konusflächen 47 und der an den Konusflächen 47 von den Flankeninnenrädern 52 und 55 wirkenden Kräfte führt dies zu einer nach radial innen gerichteten Kraft an den Umlaufrädern 46; die Umlaufräder 46 nehmen ihre radial innerste Position ein.

Nach dem Einschalten der Startvorrichtung 10 beginnt die Antriebswelle 19 linksdrehend zu drehen. Bedingt durch das Steilgewinde 77 wird das erste Flankenrad 37 in Richtung zum Antrieb 16 gezogen. Das erste Flankenrad 37 drückt dabei mit seiner Flankenfläche 43 auf die Konusfläche 47 des Umlaufrades 46, und verschiebt dieses in Richtung zum zweiten Flankenrad 40, bis dieses an jenem an der dortigen Flankenfläche 43 zur Anlage kommt. Da nunmehr keine Verschiebebewegung auf dem Steilgewinde 77 erfolgt, wird ein Antriebsmoment des Antriebs 16 auf das Zentralrad 34 übertragen, das nunmehr die Umlaufräder 46 antreibt. Die Umlaufräder 46 wälzen dabei mit ihren Konusflächen 47 auch auf den Flankenflächen 43 des ersten und zweiten Flankeninnenrades 52 bzw. 55 ab. Die Flankenflächen sind nicht mitdrehend, aber axial verschieblich. Die Umlaufräder 46 nehmen dabei über die Achsen 73 und die Nuten 70 den Abtriebsflansch 58 und den Antriebsflansch 61 mit, so dass über die Abtriebswelle 25 ein Abtriebsmoment auf das Einspurgetriebe 28 übertragen wird.

Aufgrund des bei als Elektromotoren ausgeführten Antrieben 16 zu Beginn sehr hohen Antriebsmoments, führt dies zu hohen Klemmkräften zwischen dem ersten und dem zweiten Flankenrad 37 und 40. Diese Klemmkräfte führen letztlich zu die Federkräfte des Federelements 93 übersteigenden Kräften, so dass das erste und das zweite Flankeninnenrad 52 und 55 auseinandergedrückt werden. Die Umlaufräder 46 wandern nach radial außen. Dies führt dazu, dass bezogen auf die Achsen 73 und die Umlaufräder 46 einen immer größeren Wälzkreis erfahren, der schließlich ein Maximum erreicht. Umgekehrt ist dies mit den Wälzlinien zwischen dem ersten und dem zweiten Flankeninnenrad 52 bzw. 55 und dem Umlaufrad 46. Hier wird der Radius, d.h. der Abstand zwischen der Mittelachse der Achsen 73 und den Wälzlinien immer kleiner. Dies bedeutet für die sich einstellenden Drehzahlverhältnisse zwischen der Antriebswelle 19 und der Abtriebswelle 25, dass bei zunächst radial innen liegenden Umlaufrädern 46 die Abtriebswelle 25 gegenüber der Antriebswelle 19 verhältnismäßig schnell dreht. Mit weiter sich nach außen bewegenden Umlaufrädern 46 verändern sich dann die kinematischen Verhältnisse derart, dass gegenüber der Ausgangssituation die Drehzahl der Abtriebswelle 25 sinkt. Unter der Annahme einer konstanten Antriebsleistung des Antriebs 16 bedeutet dies für ein abgegebenes Drehmoment an der Abtriebswelle 25, dass mit weiter nach außen wandernden Umlaufrädern 46 das Drehmoment an der Abtriebswelle 25 zunimmt. Dies ist zum Andrehen von Brennkraftmaschinen günstig, da diese beim Beginn des Andrehvorgangs eines besonders hohen Drehmomentbedarf aufweisen.

Ist die Brennkraftmaschine erst einmal losgebrochen, so verringert sich der Momentenbedarf der Brennkraftmaschine kontinuierlich. Dies hat zur Folge, dass auch der Antrieb 16 weniger Antriebsmoment über die Antriebswelle 19 auf das Getriebe 22 übertragen muss. In der Folge führt dies zu einer verringerten Kraft im Steilgewinde 77 und damit zu geringeren Kräften zwischen den Flankenflächen 43 des ersten Flankenrades und des zweiten Flankenrades 37 und 40. Die Kraft des Federelements 93 wird nunmehr größer als die auf das Federelement 93 vom Steilgewinde 77 her wirkende Kraft, so dass die Flankenflächen 43 des ersten Flankeninnenrades 52 und des zweiten Flankeninnenrades 55 mit größerer Kraft auf die Konusflächen 47 der Umlaufräder 46 drücken, als die Kraft zwischen den Flankenflächen 43 des ersten und zweiten Flankenrades 37 und 40. In der Folge bewegen sich die Umlaufräder 46 entlang der Nuten 70 wieder nach radial innen, so dass einerseits das Drehmoment an der Abtriebswelle 25 sinkt und andererseits die Drehzahl der Abtriebswelle 25 steigt.

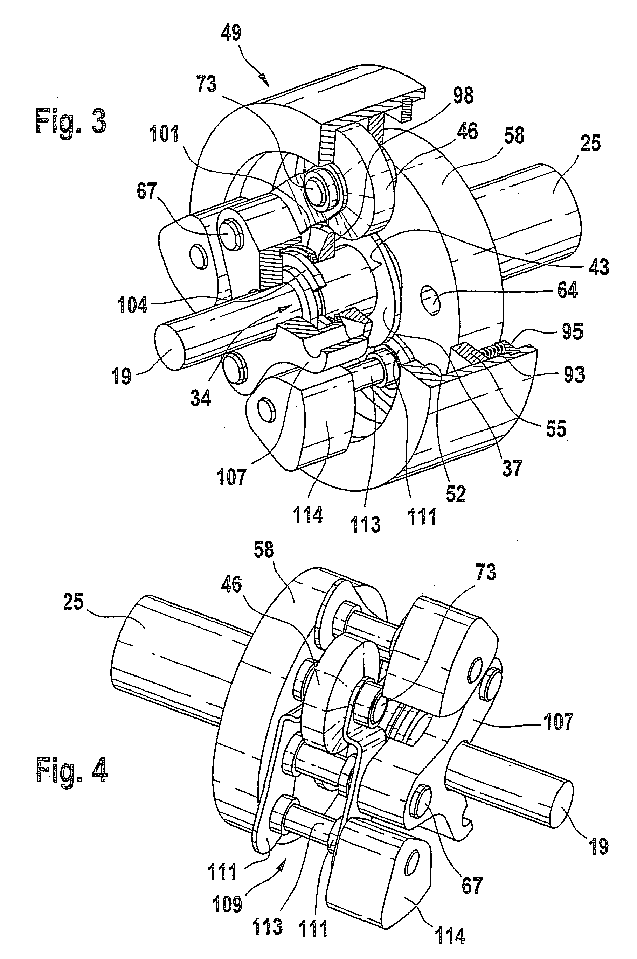

In Figur 3 ist das zweite Ausführungsbeispiel für das Getriebe 22 dargestellt. dieses Ausführungsbeispiel ist im Gegensatz zum in Figur 2 dargestellten Getriebe 22 nach einer Antriebsdrehzahl des Antriebs 16 geregelt. Die Antriebswelle 19 hat über den Wellenabschnitt, auf dem das Zentralrad 34 angeordnet ist, eine formschlüssige Kontur, die mit einer entsprechenden formschlüssigen Gegenkontur des Zentralrades 34 eingreift. Diese beiden formschlüssigen Konturen ermöglichen eine axiale Verschiebung des Zentralrades 34 auf der Antriebswelle 19. Das Zentralrad 34 besteht wiederum aus einem ersten Flankenrad 37 mit der Flankenfläche 43. Die Flankenfläche 43 des ersten Flankenrades 37 wirkt mit einer zweiten Flankenfläche 43 zusammen, die Teil einer Oberfläche eines Zentralrings 98 ist. Der Zentralring 98 wird auf dem Zentralrad 34 dadurch gehalten, dass dieser sich über ein Federelement 101 an einem am ersten Flankenrad 37 befestigten Sicherungsring 104 abstützt. Die Flankenflächen 43 des Zentralrings 98 und des ersten Flankenrades 37 umgreifen mehrere Umlaufräder 46, die wie bereits beim ersten Ausführungsbeispiel auf ihrer radialen Außenseite von den Flankenflächen 43 eines Innenrades 49 umgriffen sind. Das Innenrad 49 ist analog zum ersten Ausführungsbeispiel aufgebaut. Im Abtriebsflansch 58 sind mehrere Bohrungen 64 eingebracht, in denen mehrere Bolzen 67 befestigt sind. Die Bolzen 67 tragen einen Umlaufradträger 107, der auf der dem Antrieb 16 zugewandten Seite des Zentralrads 34 angeordnet ist. Der Umlaufradträger 107 trägt auf den Bolzen 67 einen mehrteiligen Schwenkarm 109, siehe auch Figur 4. Der Schwenkarm 109 ist zwischen dem Abtriebsflansch 58 und dem Umlaufradträger 107 angeordnet. Der Schwenkarm besteht aus zwei Einzelarmen 111, die jeweils über ihre Länge drei einzelne Öffnungen aufweisen. Die Öffnungen stehen sich jeweils fluchtend gegenüber. Die mittleren Öffnungen dienen dazu, den Umlaufradträger 107 auf dem Bolzen 67 zu lagern. Zwei untere Öffnungen nehmen eine Achse 113 auf, an der ein Gegengewicht 114 befestigt ist. Zwei obere Öffnungen nehmen die Achse 73 auf, auf der das Umlaufrad 46 angeordnet ist. Das Umlaufrad 46 ist zwischen den beiden Einzelarmen 111 gehalten.

Nachfolgend wird die Funktion des zweiten Ausführungsbeispiels anhand der Figuren 3 und 4 erläutert. Wird die Antriebswelle 19 des Antriebs 16 angetrieben, so wird gleichzeitig das Zentralrad 34 gedreht. Über die Flankenflächen 43 des ersten Flankenrades und des Zentralrings 98 werden über Reibungskräfte die Umlaufräder 46 angetrieben. Die Umlaufräder 46 wälzen dabei an Flankenflächen 43 des Innenrades 49 in bereits bekannter Weise ab. Ist die Drehzahl der Abtriebswelle 25 zunächst verhältnismäßig gering, so drücken die Flankenflächen des Zentralrades 34 mit Hilfe des Federelementes 101 die Umlaufräder 46 zunächst nach radial außen. Dadurch wird das Federelement 93 des Innenrades 49 belastet. Das Abtriebsmoment an der Abtriebswelle 25 ist dadurch zunächst verhältnismäßig hoch und dient zum Losbrechen beziehungsweise Anlassen der Brennkraftmaschine. Nimmt die Drehzahl der Abtriebswelle 25 anschließend zu, so bedeutet dies eine Zunahme der Winkelgeschwindigkeit des Umlaufradträgers 107 und damit auch eine Zunahme der Winkelgeschwindigkeit der Gegengewichte 114. Aufgrund der kinematischen Verhältnisse am Schwenkarm 109 führt die zunehmende Zentrifugalkraft der Gegengewichte 114 zu einer vergrößerten axialen Kraft im Zentralrad 34, so dass die Flankenflächen 43 des Zentralrades 34 auseinandergedrückt werden. Damit ändern sich auch die kinematischen Verhältnisse im Getriebe 22, so dass sich also das Umlaufrad 46 wieder nach radial innen bewegt und die Drehzahl der Abtriebswelle 25 überproportional zur Drehzahl der Antriebswelle 19 steigt.

## Patentansprüche

1. Startvorrichtung für Brennkraftmaschinen mit einem Antrieb (16) und einem dem Antrieb (16) nachgeordneten Getriebe (22), das als ein Umlaufgetriebe mit stufenlos variierbarer Übersetzung ausgebildet ist, **dadurch gekennzeichnet, dass** die Übersetzung des Getriebes (22) durch zumindest ein radial nach außen oder innen bewegliches Umlaufrad (46) stufenlos variierbar ist.

2. Startvorrichtung nach Anspruch 1, **dadurch gekennzeichnet, dass** das Getriebe (22) selbstregelnd ist.

3. Startvorrichtung nach Anspruch 1 oder 2, **dadurch gekennzeichnet, dass** das Getriebe (22) nach einem Antriebsmoment des Antriebs (16) regelbar ist.

4. Startvorrichtung nach Anspruch 1 oder 2, **dadurch gekennzeichnet, dass** das Getriebe (22) nach einer Antriebsdrehzahl des Antriebs (16) regelbar ist.

5. Startvorrichtung nach einem der vorhergehenden Ansprüche, **dadurch gekennzeichnet, dass** das Getriebe (22) ein Umlaufgetriebe mit einem Zentralrad (34) mit zumindest einem Umlaufrad (46) und einem Innenrad (49) ist, und dass durch das Antriebsmoment eine radiale Stellkraft auf das zumindest eine Umlaufrad (46) bewirkbar ist.

6. Startvorrichtung nach einem der Ansprüche 1 bis 4, **dadurch gekennzeichnet, dass** das Getriebe (22) ein Umlaufgetriebe mit einem Zentralrad (34) mit zumindest einem Umlaufrad (46) und einem Innenrad (49) ist, und dass durch die Antriebsdrehzahl eine radiale Stellkraft auf das zumindest eine Umlaufrad (46) bewirkbar ist.

## Claims

1. Starting device for internal combustion engines having a drive (16) and a gear mechanism (22) which is arranged downstream of the drive (16) and is embodied as a planetary gear mechanism having a continuously variable transmission ratio, **characterized in that** the transmission ratio of the gear mechanism (22) is continuously variable by means of at least one planet gear (46) which can move radially outwards or inwards.

2. Starting device according to Claim 1, **characterized in that** the gear mechanism (22) is self-regulating.

3. Starting device according to Claim 1 or 2, **characterized in that** the gear mechanism (22) can be regulated according to a drive torque of the drive (16).

4. Starting device according to Claim 1 or 2, **characterized in that** the gear mechanism (22) can be regulated according to a drive speed of the drive (16).

5. Starting device according to one of the preceding claims, **characterized in that** the gear mechanism (22) is a planetary gear mechanism having a central gear (34) with at least one planet gear (46) and one internal gear (49), and **in that** a radial setting force can be exerted on the at least one planet gear (46) by means of the drive torque.

6. Starting device according to one of Claims 1 to 4, **characterized in that** the gear mechanism (22) is a planetary gear mechanism having a central gear (34) with at least one planet gear (46) and one internal gear (49), and **in that** a radial setting force can be exerted on the at least one planet gear (46) by means of the drive speed.

## Revendications

1. Dispositif de démarrage pour des moteurs à combustion interne, qui comprend un entraînement (16) suivi en aval d'une transmission (22) constituée par un engrenage planétaire à démultiplication variable en continu,
**caractérisé en ce que**
la démultiplication de la transmission (22) peut varier en continu par l'intermédiaire d'au moins une roue planétaire (46) mobile radialement vers l'extérieur ou vers l'intérieur.

2. Dispositif de démarrage selon la revendication 1,
**caractérisé en ce que**
la transmission (22) est à autorégulation.

3. Dispositif de démarrage selon la revendication 1 ou 2,
**caractérisé en ce que**
la transmission (22) peut être réglée en fonction d'un couple de l'entraînement (16).

4. Dispositif de démarrage selon la revendication 1 ou 2,
**caractérisé en ce que**
la transmission (22) peut être réglée en fonction d'une vitesse de rotation de l'entraînement (16).

5. Dispositif de démarrage selon une des revendications précédentes,
**caractérisé en ce que**
la transmission (22) est un engrenage planétaire avec un pignon central (34) et au moins une roue planétaire (46) et une roue à denture interne (49), le couple d'entraînement pouvant exercer une force radiale de réglage sur la roue planétaire (46) au nombre d'une au moins.

6. Dispositif de démarrage selon une des revendications précédentes,
**caractérisé en ce que**
la transmission (22) est un engrenage planétaire avec un pignon central (34) et au moins une roue planétaire (46) et une roue à denture interne (49), la vitesse de rotation d'entraînement pouvant exercer une force radiale de réglage sur la roue planétaire (46) au nombre d'une au moins.
